# EUROPEAN PATENT SPECIFICATION

(11) **EP 1 434 833 B1**
(45) Date of publication and mention of the grant of the patent: **26.12.2007**
(21) Application number: 02765090.2
(22) Date of filing: 04.10.2002
(51) Int. Cl.: C10K 3/04, B01J 37/02

(54) **SELECTIVE OXIDATION**
SELEKTIVE OXYDIERUNG
OXYDATION SELECTIVE

(30) Priority: 13.10.2001 GB 0124679
(43) Date of publication of application: 07.07.2004
(73) Proprietor: Johnson Matthey PLC, 40-42 Hatton Garden London EC1N 8EE (GB)
(72) Inventor: COLLIER, Paul John, Reading RG4 5AA (GB); GOLUNSKI, Stanislaw Edmund, Reading RG4 9RR (GB)
(74) Representative: Gibson, Sara Hillary Margaret
(86) International application number: PCT/GB2002/004496
(87) International publication number: WO 2003/033625

(56) References cited:
- EP-A- 1 008 378
- US-B1- 6 280 608

## Description

This invention relates to a process for selective oxidation, in particular it relates to a process for the selective oxidation of one or more selected components from a mixed fluid stream, and to a catalyst suitable for such a process.

Complete discrimination between two gas molecules with similar chemical reactivity is highly desirable, especially when a particular molecule needs to be detected, converted into an intermediate or product, or removed. A number of materials with internal channel structures, known collectively as molecular sieves, are capable of preventing the diffusion of any gas molecules that are too large to pass through the narrowest part of the channels. When packed in the form of a continuous bed or coated onto a rigid but porous substrate, these materials can be used as gas filters. However, they can restrict the flow of a gas stream and introduce a large pressure drop. Of the molecular sieve materials, some of the most commonly used are those which have a zeolite structure.

In EP 0878233 A2, the present applicant describes an improved method for the deposition of a zeolite membrane or overlayer onto a support material. The support material is preferably a readily reducible metal oxide such as copper oxide deposited on a non-reducible substrate. This zeolite coated reducible metal oxide shows a marked specificity for the removal of hydrogen from a mixture of hydrogen and ethane when compared with an uncoated substrate. It is thus of benefit during processes which require the selective removal of hydrogen. This process of hydrogen removal is non-catalytic, and therefore the reducible metal oxide needs to be regenerated periodically by exposure to oxygen or air.

WO94/05608 describes a process for the dehydrogenation of a hydrocarbon utilising a two component system. The first component is a catalyst which acts to convert the hydrocarbon feed to a mixture of the desired dehydrogenated product and unwanted hydrogen. The second component, which is provided with a zeolite type overlayer, acts to remove the unwanted hydrogen so improving the overall efficiency of the process. At regular intervals, the hydrocarbon feed is interrupted to allow air to be admitted, thereby regenerating the second component. A stated aim of the process is to improve the product yield, whilst avoiding the oxidation of the reactant or product.

US 5,354,720 describes a multi-component, layered catalyst used *inter alia* to reduce nitrogen oxides to molecular nitrogen in the exhaust gases of motor vehicles. The catalysts comprise a substrate, deposited onto which is a metal containing oxidic first catalytic layer, and a second catalytic layer of a copper or iron containing zeolite. The catalysts are so called three-way catalysts, which means that in addition to reducing nitrogen oxides they also must simultaneously oxidise carbon monoxide and hydrocarbons. Three way catalysts are not selective, indeed their function is to be non-selective in order to ensure that as great a proportion of noxious gases as possible is eliminated from vehicle exhausts.

Japanese Abstract No. JP 6190282 discloses a similar multi-component, layered catalyst.

In many processes there is a need to selectively oxidise one or more components from a mixture of components.

In accordance with a first aspect of the present invention, a process for the selective oxidation of one or more components of a fluid stream comprises contacting the fluid stream with an oxidation catalyst at a selected temperature and providing a source of oxygen; wherein the oxidation catalyst comprises a catalyst substrate provided with a substantially continuous coating of a molecular sieve material.

The coating of molecular sieve material forms a semi-permeable membrane of microscopically small crystallites over the active sites of the catalyst substrate. Only molecules below a certain critical diameter can pass through the membrane to reach the active sites. Similarly, only molecules below the same critical diameter can escape from the active sites. In a mixed fluid stream, not all of the components may satisfy the critical diameter criterion, and it is only those which do, which can gain access to the catalyst substrate and undergo oxidation. The process is thus selective in that only certain components of the fluid stream will be oxidised. This is in contrast with the catalysts described in US 5,354,720 and JP 6190282 where both the first catalytic layer and the second catalytic zeolite layer are involved in the catalytic reaction and function independently of one another. In the process and catalysts of the present invention, there is only one catalytic species present, the molecular sieve coating being catalytically inert.

Preferably, the process further comprises increasing or decreasing the selected temperature such that further or alternative components of the fluid stream are selectively oxidised.

The selected temperature is dependent on the particular species which it is desired to selectively oxidise and also on the physical properties of the components of the fluid stream. Any temperature at which the components are fluid may be used. Preferably, the selected temperature is up to 500°C. Temperatures as low as -100°C may be effective for some systems.

Transport of species through the membrane is diffusion controlled and as such is temperature dependent. There is a minimum temperature below which no oxidation is possible however, at any given temperature above this minimum, one or more components of the fluid stream are able to diffuse through the membrane. As the temperature is increased, species which were unable to diffuse through the membrane at lower temperatures may be able to do so. Conversely, as the temperature is reduced some species may no longer be able to diffuse. It is thus possible to tailor the process temperature to select and oxidise one or more particular components of a fluid stream. For example, in a process where the fluid stream is recirculated, the temperature can be set at a low level to oxidise one component, before being increased to selectively oxidise a second component. In a further example, the process may be used to purify a continuous fluid stream by selectively oxidising one or more impurities.

Preferably, the catalyst substrate comprises at least one platinum group metal supported on a support material.

Platinum group metals (PGM) as is known in the art, comprise the lower members of Group VIII of the periodic table, and are namely platinum, palladium, ruthenium, rhodium, iridium and osmium. PGM are known to be effective catalysts for the oxidation of a wide variety of chemical species, either as individual metals, as alloys with other PGM or as alloys with base metals such as iron or bismuth.

The support material may be any of the widely used support materials as are known in the art. Preferably, the support material is an oxidic material. Commonly used oxidic materials include silica, alumina, zirconia, mixed oxides such as spinels, and oxides of tin, zinc and titanium. Alternatively, the support material may be a non-oxidic material such as carbon. The support material may be a single phase, a single phase doped with a small amount of a second or further phase, or be a mixture of two or more phases

The physical form of the support material is not important and can be chosen to suit a particular application. For example, the support may be in the form of a powder, a granulate, micro-spheres or a porous monolith. Furthermore, the physical form of the oxidation catalyst may be altered or modified, substantially without adversely affecting selectivity. For example, a bulk form of the catalyst may be crushed or otherwise comminuted.

In a preferred embodiment of the present invention, the catalyst substrate comprises at least one of Pt, Pd, Pt-Fe or Pd-Fe supported on a silica support.

Several methods are known for the production of a molecular sieve coating on a substrate. The method described in WO94/05608 was found by the present applicants not to give satisfactory coatings. Other methods include the simple contact of a solid substrate with a zeolite gel, which also gives poor quality coatings, and pulsed laser deposition, which although able to provide high quality coatings, is prohibitively expensive and complex to form the basis of a practical commercial process. A particularly preferred method for forming a molecular sieve coating is that which is described in the present applicant's co-pending application EP 0878233 A2. In this method, a material to be coated is treated with a polyelectrolyte, such as Percol 1697 (supplied by Allied Colloids Ltd), prior to or simultaneously with the formation of a molecular sieve membrane. The reaction is carried out in an alkaline mixture for example, a dilute ammonia solution, and gives rise to a material which carries a substantially continuous coating of a molecular sieve material.

In this specification, the term 'molecular sieve material' is intended to include materials which may strictly be defined as zeolites by virtue of their structural type but, also the *zeotypes* i.e., those materials which have similar properties to the zeolites. Thus materials such as aluminophosphates (ALPOs), metal substituted aluminophosphates (MeAPOs), silicoaluminophosphates (SAPOs), framework substituted materials such as titanium silicalite (TS-1) and vanadium silicalite (VS-1), and other molecular sieve materials as are known in the art, are also included.

Preferably, the molecular sieve material comprises a zeolite material.

Preferably, the zeolite material comprises a 3A or a 4A zeolite for example, Na-4A or K-3A either as single phases, or as a mixture in any proportion. Alternatively, and according to the particular oxidation process of interest, other zeolites may be used. For example, the Al/Si ratio may be adjusted. The zeolite may be modified *in situ* by ion exchange with a group I metal for example, potassium ions may be exchanged for sodium ions in order to alter or partially alter a Na-4A zeolite to a K-3A zeolite. Rubidium ions may also be used, and RbBr appears to offer a zeolite coating with improved stability in cycling processes. Other zeolites such as ZSM-5, zeolite Y and zeolite β may also be effective.

The fluid stream may be a gas stream or a liquid stream.

In one embodiment, the fluid stream comprises a gas stream. Preferably, the gas stream comprises carbon monoxide. More preferably, the gas stream further comprises at least one alkane, and carbon monoxide is selectively oxidised. In this embodiment, the selected temperature is preferably in the range from 150 - 500°C.

During the manufacture of maleic anhydride from butane, the feed gas is passed over a catalyst in a reactor. The reaction is such that not all of the butane is converted into maleic anhydride in a single pass. To convert the remaining butane, the product gas stream can be fed back to the reactor after condensation and removal of the maleic anhydride. This can be achieved by lowering the temperature to below 200°C (the boiling point of maleic anhydride). However, the product stream also contains some carbon monoxide formed as a by product. This carbon monoxide poisons the catalyst used in the reactor. The catalyst of the present invention can be used to selectively remove carbon monoxide from the product stream by oxidising it to carbon dioxide, which does not poison the catalyst. The temperature is selected such that the catalyst has no effect on the butane component of the product stream. In this way the overall efficiency of the reactor can be improved.

In an alternative embodiment, the fluid stream comprises a liquid stream. Preferably, the liquid stream comprises at least one alcohol. More preferably, the liquid stream comprises at least one linear alcohol and at least one branched alcohol, and the at least one linear alcohol is selectively oxidised. The alcohols may be present as pure compounds or be in solution in a suitable solvent for example, toluene.

In accordance with a second aspect of the present invention, a catalyst suitable for the selective oxidation of one or more components of a fluid stream comprises a catalyst substrate provided with a substantially continuous coating of a molecular sieve material; wherein the catalyst substrate comprises at least one platinum group metal supported on a support material.

Preferably, the molecular sieve material comprises a zeolite material.

In a particularly preferred embodiment, a catalyst suitable for the selective oxidation of carbon monoxide from a mixture comprising carbon monoxide and an alkane comprises a catalyst substrate provided with a substantially continuous coating of a zeolite material; wherein the catalyst substrate comprises at least one platinum group metal supported on an oxidic support; and wherein the zeolite material comprises Na-4A or K-3A.

The invention will now be described by way of example only with reference to the following drawings in which;
Figure 1 is a graph showing the progress of carbon monoxide oxidation and butane conversion with increasing temperature for a first example of a process according to the present invention;
Figure 2 is a graph showing the progress of carbon monoxide oxidation and butane conversion with increasing temperature for a second example of a process according to the present invention;
Figure 3 is a graph showing the progress of carbon monoxide oxidation and butane conversion with increasing temperature for a comparative example of a process not according to the present invention; and,
Figure 4 is a graph showing the progress of carbon monoxide oxidation and butane conversion with increasing temperature for an example of a process according to the present invention in which the coated catalyst is in powder form.

### EXAMPLE 1

### Preparation of a membrane covered platinum based oxidation catalyst (zeolite A on 5%Pt-0.5%Fe / SiO₂)

### (a) Catalyst substrate preparation

20g SiO₂ spheres (3.2mm diameter) were impregnated by the incipient wetness technique with a solution comprising 1.02g citric acid, 2.02g tetraammine platinum (II) hydrogen carbonate (50.61% Pt assay), 0.8g iron (III) nitrate nonahydrate and 10.35g demineralised water. Gentle heating and agitation were applied to drive off the excess liquid and then the spheres were dried at 105°C and calcined at 500°C for 2 hours.

### (b) Zeolite A coating

5g of Pt-Fe/SiO₂ spheres prepared in (a) were added to a 5wt.% solution of polyelectrolyte (Percol 1697 from Allied Colloids Ltd.) containing dilute ammonia and stirred at room temperature for 20 minutes and subsequently separated from the solution and washed with demineralised water. The spheres were added to a zeolite gel which was prepared by rapidly adding, with stirring, a solution of 6.07g sodium aluminate in 52g demineralised water to a solution of 15.51g sodium metasilicate in 52g demineralised water. The Pt-Fe/SiO₂ containing gel was stirred at room temperature for 2 hours and then hydrothermally crystallised at 100°C for 24 hours. The zeolite coated Pt-Fe/SiO₂ spheres were separated from the crystallisation solution and washed with demineralised water, dried at 105°C and then calcined at 500°C for 2 hours.

### EXAMPLE 2

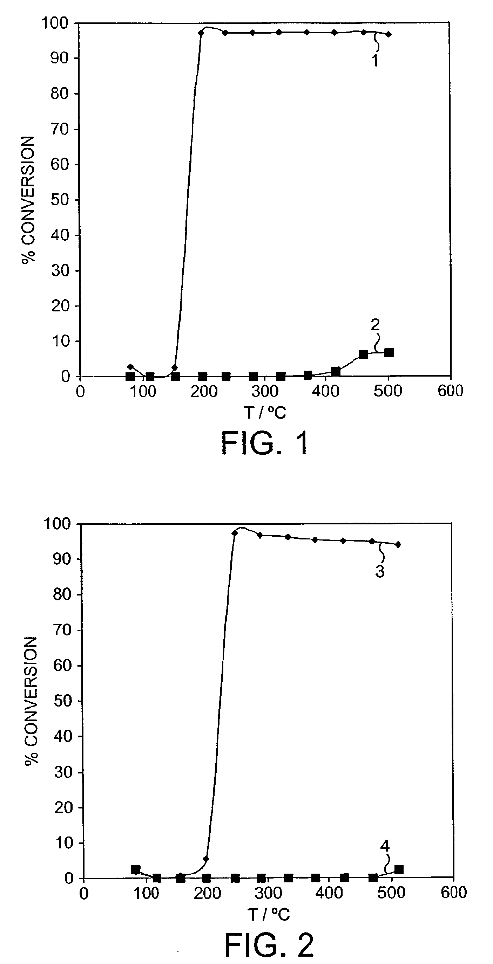

The coated catalyst prepared according to example 1 above was tested using the following regime.
A gas mixture of 0.5% CO, 1% butane, 18%O₂ and 80.5% He was passed at a rate of 100cm³min⁻¹ (≡ space velocity of 20,000 h⁻¹) through a packed bed of the catalyst. This gas stream is representative of the gas stream formed during the manufacture of maleic anhydride from butane. The catalyst was contained in a tubular reactor (0.5cm internal diameter), which was heated at 6°C min⁻¹ to a maximum temperature of 500°C. The composition of the gas exiting the reactor was monitored using gas chromatography.
As shown in Fig.1, oxidation of carbon monoxide to carbon dioxide began at ca. 150°C with almost complete conversion at increasing temperature (curve 1). There was no measurable conversion of butane below ca. 400°C (curve 2). These results show that at temperatures between 150 and 400°C, carbon monoxide is selectively oxidised.

### EXAMPLE 3

### Preparation of a membrane covered palladium based oxidation catalyst (zeolite A on 1%Pd-6.6%Fe / SiO₂).

### (c) Catalyst substrate preparation

20g SiO₂ spheres (3.2mm diameter) were impregnated by the incipient wetness technique with a solution comprising 2.06g citric acid, 1.49g palladium nitrate (15.23% Pd assay), 10.39g iron (III) nitrate nonahydrate and 4.04g demineralised water. Gentle heating and agitation were applied to drive off excess liquid and the spheres were then dried at 105°C and calcined at 500°C for 2 hours.

### (d) Zeolite A coating

5g of Pd-Fe/SiO₂ spheres prepared in (c) were added to a 5wt.% solution of polyelectrolyte (Percol 1697 from Allied Colloids Ltd.) containing dilute ammonia and stirred at room temperature for 20 minutes and subsequently separated from the solution and washed with demineralised water. The spheres were added to a zeolite gel which was prepared by rapidly adding, with stirring, a solution of 6.07g sodium aluminate in 52g demineralised water to a solution of 15.51g sodium meta silicate in 52g demineralised water. The Pd-Fe/SiO₂ containing gel was stirred at room temperature for 2 hours and then hydrothermally crystallised at 100°C for 24 hours. The zeolite coated Pd-Fe/SiO₂ spheres were separated from the crystallisation solution and washed with demineralised water, dried at 105°C and then calcined at 500°C for 2 hours.

### EXAMPLE 4

The coated catalyst prepared in example 3 was subjected to the same test regime as that described in example 2.
As shown in Fig.2, oxidation of carbon monoxide to carbon dioxide began at ca. 200°C with almost complete conversion at increasing temperature (curve 3). There was no measurable conversion of butane below ca. 500°C (curve 4). These results show that at temperatures between 200 and 500°C, carbon monoxide is selectively oxidised.

### EXAMPLE 5

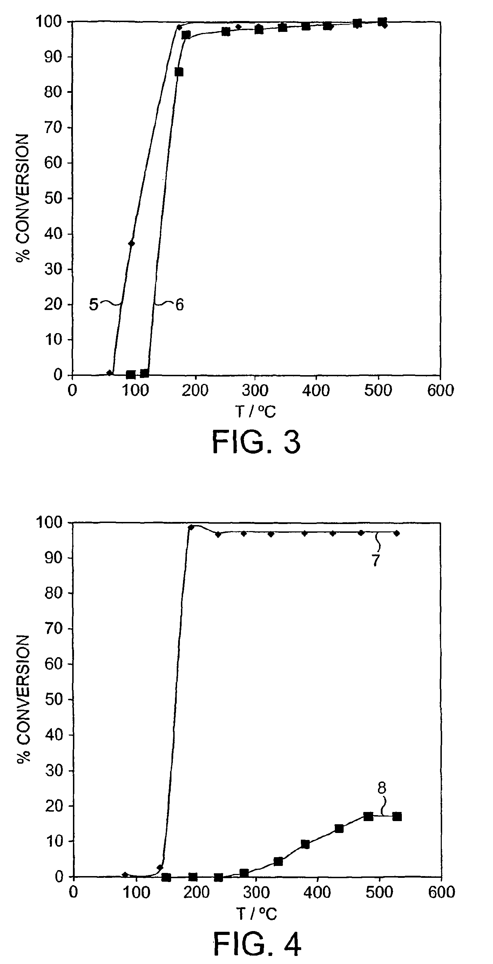

By way of comparison, an uncoated platinum based oxidation catalyst, prepared according to the method described in example 1 part (a) only, was tested using the test regime of example 2.
As shown in Fig.3, oxidation of carbon monoxide to carbon dioxide began at ca. 75°C (curve 5) with almost complete conversion at increasing temperature. Conversion of butane began at ca. 125°C (curve 6). However, at no point was complete selectivity to the oxidation of carbon monoxide observed. This result shows that in the absence of a zeolite coating, the catalyst is non-specific.

### EXAMPLE 6

The coated catalyst prepared according to example 1 was crushed and sieved to a particle size range of between 250 and 800 µm. The resulting powder was tested using the test regime described in example 2.
As shown in Fig.4, the general pattern of behaviour of the crushed coated catalyst closely resembled that of the uncrushed, coated catalyst (Fig. 1), and not the behaviour of the uncrushed, uncoated catalyst (Fig. 3). In Fig. 4, curves 7 and 8 refer to the oxidation of carbon monoxide and the conversion of butane respectively. This result shows that the coating covers the catalytically active sites and not just the exterior of the catalyst particles.

### EXAMPLE 7

A catalyst comprising 5wt% Pt and 0.5wt% Bi supported on BaO doped silica spheres was prepared by impregnation and subsequent calcination at 500°C. The catalyst spheres were then added to a 5%wt solution of polyelectrolyte (Percol 1697) containing dilute ammonia and stirred at room temperature for 20 minutes. After separation from the polyelectrolyte and washing with demineralised water, the spheres were coated with ZSM-5 by hydrothermal crystallisation and calcined at 500°C. Finally, the coated spheres were ion exchanged with a solution of rubidium nitrate.

### EXAMPLE 8

500mg of the catalyst prepared in example 7 was added to a solution of 5wt% hexan-1-ol and 5wt% 4,4-dimethylhexan-1-ol in toluene. The solution was stirred in air for 3 hours at 75°C. GCMS analysis of the reacted product showed that the linear alcohol, hexan-1-ol was oxidised to the corresponding aldehyde in ca. 90% yield, whilst the yield of the aldehyde corresponding to the branched alcohol, 4,4-dimethylhexan-1-ol was only ca. 5%. This result illustrates that the zeolite coated catalyst is selective with respect to the liquid phase oxidation of the less sterically hindered, linear alcohol.

### EXAMPLE 9

To confirm the result of example 8, a further catalyst according to example 7 was prepared except that the steps to produce the zeolite coating and ion exchange were omitted. When the reaction of example 8 was repeated with this catalyst the yield of the aldehydes corresponding to the linear and branched alcohols was 63% and 58% respectively. This illustrates that without the zeolite coating, the catalyst is non-selective.

## Claims

1. A process for the selective oxidation of one or more components of a fluid stream, the process comprising contacting the fluid stream with an oxidation catalyst at a selected temperature and providing a source of oxygen; wherein the oxidation catalyst comprises a catalyst substrate provided with a substantially continuous coating of a molecular sieve material.

2. A process according to claim 1 further comprising increasing or decreasing the selected temperature such that at least one further or alternative component of the fluid stream is selectively oxidised.

3. A process according to claim 1 or claim 2, wherein the catalyst substrate comprises at least one platinum group metal supported on a support material.

4. A process according to claim 3, wherein the support material comprises an oxidic material.

5. A process according to claim 3 or claim 4, wherein the catalyst substrate comprises Pt, Pd, Pt-Fe or Pd-Fe on a silica support.

6. A process according to any preceding claim, wherein the molecular sieve material comprises a 3A zeolite, a 4A zeolite or other zeolite material.

7. A process according to any preceding claim, wherein the selected temperature is up to 500°C.

8. A process according to any preceding claim, wherein the fluid stream comprises a gas stream.

9. A process according to claim 8, wherein the gas stream comprises carbon monoxide and at least one alkane; and wherein carbon monoxide is selectively oxidised.

10. A process according to any of claims 1 to 7, wherein the fluid stream comprises a liquid stream.

11. A process according to claim 10, wherein the liquid stream comprises at least one alcohol.

12. A catalyst suitable for the selective oxidation of one or more components of a fluid stream, comprising a catalyst substrate comprising at least one platinum group metal supported on a support material, said catalyst substrate being provided with a substantially continuous coating of a molecular sieve material.

13. A catalyst according to claim 12, wherein the molecular sieve material comprises a zeolite material.

14. A catalyst according to claim 13, wherein the zeolite material comprises a 3A or a 4A zeolite.

## Patentansprüche

1. Verfahren zur selektiven Oxidation von einem oder mehreren Bestandteilen eines Fluidstroms, wobei das Verfahren das Inkontaktbringen des Fluidstroms mit einem Oxidationskatalysator bei einer ausgewählten Temperatur und die Bereitstellung einer Sauerstoffquelle umfasst, wobei der Oxidationskatalysator ein Katalysatorsubstrat umfasst, das mit einem im Wesentlichen kontinuierlichen Überzug eines Molekularsiebmaterials versehen ist.

2. Verfahren nach Anspruch 1, das außerdem die Erhöhung oder Verminderung der ausgewählten Temperatur auf eine solche Weise umfasst, dass wenigstens ein weiterer oder ein alternativer Bestandteil des Fluidstroms selektiv oxidiert wird.

3. Verfahren nach Anspruch 1 oder 2, wobei das Katalysatorsubstrat wenigstens ein Metall der Platingruppe umfasst, das von einem Trägermaterial getragen wird.

4. Verfahren nach Anspruch 3, wobei das Trägermaterial ein oxidisches Material umfasst.

5. Verfahren nach Anspruch 3 oder 4, wobei das Katalysatorsubstrat Pt, Pd, Pt-Fe oder Pd-Fe auf einem Kieselsäureträger umfasst.

6. Verfahren nach irgendeinem vorausgehenden Anspruch,
wobei das Molekularsiebmaterial einen Zeolithen 3A, einen Zeolithen 4A oder ein anderes Zeolithmaterial umfasst.

7. Verfahren nach irgendeinem vorausgehenden Anspruch,
wobei die ausgewählte Temperatur bis zu 500 °C beträgt.

8. Verfahren nach irgendeinem vorausgehenden Anspruch,
wobei der Fluidstrom einen Gasstrom umfasst.

9. Verfahren nach Anspruch 8, wobei der Gasstrom Kohlenmonoxid und wenigstens ein Alkan umfasst, und wobei Kohlenmonoxid selektiv oxidiert wird.

10. Verfahren nach irgendeinem der Ansprüche 1 bis 7, wobei der Fluidstrom einen Flüssigkeitsstrom umfasst.

11. Verfahren nach Anspruch 10, wobei der Flüssigkeitsstrom wenigstens einen Alkohol umfasst.

12. Katalysator, der für die selektive Oxidation von einem oder mehreren Bestandteilen eines Fluidstroms geeignet ist, der ein Katalysatorsubstrat umfasst, das wenigstens ein Metall der Platingruppe umfasst, das von einem Trägermaterial getragen wird, wobei das Katalysatorsubstrat mit einem im Wesentlichen kontinuierlichen Überzug eines Molekularsiebmaterials versehen ist.

13. Katalysator nach Anspruch 12, wobei das Molekularsiebmaterial ein Zeolithmaterial umfasst.

14. Katalysator nach Anspruch 13, wobei das Zeolithmaterial einen Zeolithen 3A oder 4A umfasst.

## Revendications

1. Procédé pour l'oxydation sélective d'un ou plusieurs constituants d'un courant de fluide, procédé comprenant les étapes consistant à mettre en contact le courant de fluide avec un catalyseur d'oxydation à une température choisie et à fournir une source d'oxygène ; dans lequel le catalyseur d'oxydation comprend un substrat de catalyseur muni d'un revêtement pratiquement continu d'une matière consistant en un tamis moléculaire.

2. Procédé suivant la revendication 1, comprenant en outre l'élévation ou l'abaissement de la température choisie de sorte qu'au moins un constituant supplémentaire ou autre constituant du courant de fluide soit oxydé sélectivement.

3. Procédé suivant la revendication 1 ou la revendication 2, dans lequel le substrat de catalyseur comprend au moins un métal du groupe du platine porté par une matière de support.

4. Procédé suivant la revendication 3, dans lequel la matière de support comprend une matière du type oxyde.

5. Procédé suivant la revendication 3 ou la revendication 4, dans lequel le substrat de catalyseur comprend Pt, Pd, Pt-Fe ou Pd-Fe sur un support en silice.

6. Procédé suivant l'une quelconque des revendications précédentes, dans lequel la matière consistant en un tamis moléculaire comprend une zéolite de 3 Å, une zéolite de 4 Å ou une autre matière zéolitique.

7. Procédé suivant l'une quelconque des revendications précédentes, dans lequel la température choisie va jusqu'à 500°C.

8. Procédé suivant l'une quelconque des revendications précédentes, dans lequel le courant de fluide comprend un courant gazeux.

9. Procédé suivant la revendication 8, dans lequel le courant gazeux comprend du monoxyde de carbone et au moins un alcane ; et dans lequel le monoxyde de carbone est oxydé sélectivement.

10. Procédé suivant l'une quelconque des revendications 1 à 7, dans lequel le courant de fluide comprend un courant liquide.

11. Procédé suivant la revendication 10, dans lequel le courant liquide comprend au moins un alcool.

12. Catalyseur convenable pour l'oxydation sélective d'un ou plusieurs constituants d'un courant de fluide, comprenant un substrat de catalyseur qui comprend au moins un métal du groupe du platine porté par une matière de support, ledit substrat de catalyseur étant muni d'un revêtement pratiquement continu d'une matière consistant en un tamis moléculaire.

13. Catalyseur suivant la revendication 12, dans lequel la matière consistant en un tamis moléculaire comprend une matière zéolitique.

14. Catalyseur suivant la revendication 13, dans lequel la matière zéolitique comprend une zéolite de 3 Å ou une zéolite de 4 Å.
